(19) Europäisches Patentamt
European Patent Office
Office européen des brevets

(11) **EP 1 471 334 B1**

(12) **FASCICULE DE BREVET EUROPEEN**

(45) Date de publication et mention
de la délivrance du brevet:
**02.05.2012 Bulletin 2012/18**

(51) Int Cl.:
***B60L 15/20*** *(2006.01)*     ***G01D 7/08*** *(2006.01)*
***G01D 3/024*** *(2006.01)*

(21) Numéro de dépôt: **04290991.1**

(22) Date de dépôt: **14.04.2004**

(54) **Indicateur de pilotage pour un aéronef, destiné à fournir la poussée engendrée par au moins un moteur de l'aéronef**

Flugzeugsteuerungsanzeige zum Anzeigen der Schuberzeugung von mindestens einem Flugzeugmotor

Pilot display for an aircraft, for displaying the thrust generated by at least one of the engines

(84) Etats contractants désignés:
**AT BE BG CH CY CZ DE DK EE ES FI FR GB GR HU IE IT LI LU MC NL PL PT RO SE SI SK TR**

(30) Priorité: **22.04.2003 FR 0304914**

(43) Date de publication de la demande:
**27.10.2004 Bulletin 2004/44**

(73) Titulaire: **AIRBUS OPERATIONS (SAS)**
**31060 Toulouse (FR)**

(72) Inventeurs:
• **Andre, Joan**
**31770 Colomiers (FR)**
• **Joye, Jacky**
**32600 L'Isle Jourdain (FR)**
• **Malagoli, Armand**
**31300 Toulouse (FR)**
• **Moulis, François**
**31490 Leguevin (FR)**

(74) Mandataire: **Bonnetat, Christian**
**Gevers France**
**23bis, rue de Turin**
**75008 Paris (FR)**

(56) Documents cités:
US-A- 4 083 518     US-A- 5 696 704
US-A1- 2002 072 831

**Description**

La présente invention concerne un indicateur de pilotage pour un aéronef, en particulier un avion de transport, qui est destiné à fournir la poussée engendrée par au moins un moteur de l'aéronef.

On sait que la définition d'un avion nécessite un dialogue entre l'avionneur et le motoriste. En effet, l'avionneur spécifie au motoriste un jeu de poussées nécessaires, en fonction des missions et des performances que devra remplir l'avion. Ce jeu de poussées est dépendant des conditions ambiantes (pressions, températures) et opérationnelles de l'avion (ralenti, croisière, montée, décollage, etc ...), mais également du prélèvement d'air pour le conditionnement de la cabine et/ou pour le dégivrage des ailes et/ou des nacelles. Le motoriste établit, par calculs ou par essais, les courbes de poussée du moteur, en fonction des conditions ambiantes et d'une caractéristique physique du moteur, qui est appelée "paramètre de commande du moteur" et qui est utilisée ensuite par un système de régulation à pleine autorité du moteur du type FADEC ("Full Authority Digital Engine Control"), pour la régulation du débit de carburant délivré au moteur. Le jeu de poussées initialement défini par l'avionneur est donc transformé par le motoriste en un jeu de valeurs du paramètre de commande du moteur, appelé "table de gestion de poussée".

Dans les avions actuels équipés de moteurs à réaction, le paramètre de commande du moteur pris en compte est affiché dans le poste de pilotage et utilisé par le pilote pour surveiller la poussée du moteur. Les paramètres de commande du moteur, qui sont actuellement proposés par les motoristes, sont :

- la vitesse de rotation N1 du module de basse pression du moteur ;
- le rapport de pressions moteurs (entrée compresseur et sortie turbine) EPR ("Engine Pressure Ratio") ;
- le rapport TPR ("Turbofan Power Ratio") ; et
- le couple.

Lorsque le pilote actionne la manette de gaz ou lorsque le pilote automatique est engagé et commande la poussée des moteurs, l'ordre correspondant est envoyé au système FADEC et est converti, en fonction des conditions ambiantes et du prélèvement d'air, en une valeur du paramètre de commande correspondant à une poussée commandée. Cette conversion utilise lesdites tables de gestion de poussée, qui sont stockées dans des mémoires non volatiles du système FADEC.

Pour les avions équipés d'un système de gestion automatique de la poussée, lorsque ce système est activé, l'ordre envoyé au système FADEC peut être directement la valeur (commandée) du paramètre de commande (EPR, N1, ...). De plus, la valeur effective dudit paramètre de commande (EPR, N1, ...) est directement mesurée par un ou plusieurs capteurs installés sur le moteur et lus par le système FADEC. Le système FADEC dispose ainsi également de la valeur effective de ce paramètre.

Ces deux valeurs représentant la valeur commandée et la valeur effective, sont envoyées par le système FADEC vers le calculateur en charge de la gestion des affichages au niveau du poste de pilotage. La surveillance de ces deux caractéristiques physiques du moteur par le pilote permet de vérifier que la poussée commandée a bien été atteinte par le moteur.

On notera par ailleurs que d'autres paramètres sont également affichés dans le poste de pilotage : le rapport EPR maximum ou le régime N1 maximum, permettant de visualiser les valeurs du régime N1 ou du rapport EPR qui seront obtenues lorsque le pilote demandera la poussée maximale disponible pour les différentes phases de vol (le décollage/remise de gaz, la montée/croisière, le maximum continu et le ralenti), ainsi que la valeur N1 limite correspondant au régime N1 maximal pouvant être atteint dans le mode d'opération du moteur.

Le document US2002/072831 par exemple montre un indicateur de pilotage permettant d'afficher des rapports EPR. Sur un écran de visualisation, un cadran gradué est affiché dans lequel sont représentés

- l'EPR maximal possible pour la phase de vol actuelle, en fonction de la phase de vol actuelle de l'aéronef et pour les conditions ambiantes actuelles,
- l'EPR piloté correspondant à la position de la manette de gaz de l'aéronef, et
- l'EPR effectif actuel.

L'EPR piloté et l'EPR effectif actuel sont visualisés en proportion de l'EPR maximal possible.

Toutefois, une telle représentation de la poussée du moteur dans le poste de pilotage, qui est donc mise en oeuvre par l'intermédiaire d'un paramètre de commande du moteur, représentant une caractéristique physique dudit moteur, présente de nombreux inconvénients.

Premièrement, le paramètre de commande du moteur (EPR ou N1 par exemple) est une caractéristique qui varie considérablement en fonction des conditions ambiantes. A iso-poussée, le paramètre de commande donne des valeurs différentes en fonction des conditions ambiantes ou du prélèvement d'air sur le moteur. Ainsi, dans sa préparation d'avant vol, le pilote doit calculer, en fonction des conditions ambiantes et des données de l'avion, la valeur du paramètre de commande (EPR, N1, ...) que les moteurs devront atteindre pendant la phase de décollage.

Deuxièmement, ces paramètres de commande qui correspondent à une caractéristique physique du moteur, ne représentent pas des lectures directes de la poussée. Une interprétation supplémentaire est donc nécessaire par le pilote pour traduire une telle information en poussée. Compte tenu de la difficulté décrite précédemment, une telle interprétation est quasiment impossible. Par exemple, il est difficile :

- d'évaluer la perte de poussée induite par un écart observé entre la valeur effective et la valeur commandée, par exemple de 1 % sur un affichage du régime N1 ou de 0.01 sur un affichage du rapport EPR ;
- de déterminer la poussée supplémentaire, dont le pilote peut disposer si la manette des gaz est avancée ; et
- de savoir si la poussée maximale a bien été atteinte.

Troisièmement, lorsque de l'air est prélevé sur le moteur pour le conditionnement d'air de la cabine ou le dégivrage des ailes ou de la nacelle, il en résulte une diminution de la poussée maximale disponible, qui correspond à l'énergie prélevée sur le moteur. Cette perte de poussée est impossible à quantifier, compte tenu des difficultés précitées.

Par ailleurs, quatrièmement, on sait qu'un même type d'avion peut disposer de plusieurs motorisations différentes et, par conséquent, de plusieurs types d'indications différents dans le poste de pilotage. Aussi, il n'est pas possible de ne prévoir qu'un seul indicateur pour l'affichage des informations du moteur, sur toutes les versions dudit même type d'avion, disposant de plusieurs motorisations différentes.

La présente invention a pour objet de remédier à ces inconvénients. Elle concerne un indicateur de pilotage universel, particulièrement lisible et compréhensible, qui est destiné à fournir la poussée engendrée par au moins un moteur d'un aéronef.

A cet effet, selon l'invention, ledit indicateur de pilotage du type comportant :

- des sources d'informations fournissant au moins des informations relatives à un paramètre de commande du moteur ;
- des moyens de traitement d'informations reçues desdites sources d'informations ; et
- des moyens d'affichage susceptibles de présenter des informations relatives audit moteur sur au moins un écran de visualisation,

est remarquable en ce que lesdits moyens de traitement d'informations déterminent, pour ledit moteur, au moins :

- la poussée maximale qui est disponible :

  - ■ pour la phase de vol actuelle ;
  - ■ en fonction de la configuration actuelle de l'aéronef ; et
  - ■ pour les conditions anémométriques actuelles ;

- la poussée commandée ; et
- la poussée effective, lesdites poussées commandée et effective étant exprimées en pourcentage de ladite poussée maximale,

et en ce que lesdits moyens d'affichage présentent, sur ledit écran de visualisation, un cadran qui est gradué en pourcentage, dont le maximum représente ladite poussée maximale, et qui est muni de premier et deuxième signes caractéristiques, dont les positions sur ledit cadran représentent respectivement lesdites poussées commandée et effective.

Grâce à l'invention, ledit indicateur de pilotage présente de très nombreux avantages. En particulier :

- il est universel, puisqu'il détermine et affiche directement la poussée et non pas un paramètre de commande du moteur, comme les indicateurs connus précités, et est indépendant du paramètre de commande du moteur utilisé. Ceci permet de ne prévoir qu'un seul indicateur de pilotage pour un même type d'avion comprenant des motorisations différentes (et donc également des paramètres de commande différents), ce qui a pour conséquence bien entendu de réduire le coût et de plus facilite l'entraînement des pilotes ;
- ledit indicateur est un indicateur de pilotage et non pas un simple indicateur de surveillance du moteur, puisqu'il fournit une poussée opérationnelle tenant compte de l'intégration du moteur sur l'aéronef, et ceci en fonctionnement. Ladite poussée maximale est définie comme étant la poussée maximum dont le pilote dispose :

  - ■ pour la phase de vol actuelle (décollage, croisière, montée, ...) ;
  - ■ en fonction de la configuration actuelle de l'aéronef (hors prélèvement d'air) ; et
  - ■ pour les conditions anémométriques du moment.

Il ne s'agit donc pas d'une simple limite moteur ; et

- ledit indicateur de pilotage permet une lecture simple, rapide et facilement compréhensible de la poussée disponible pour le moteur, ce qui est particulièrement avantageux en mode de pilotage manuel notamment.

En outre, avantageusement, lesdits moyens de traitement d'informations déterminent, de plus, une poussée pilotée qui est exprimée en pourcentage de ladite poussée maximale et qui correspond à la poussée représentative de la position de la manette de gaz de l'aéronef, et lesdits moyens d'affichage présentent de plus, sur ledit écran de visualisation, un troisième signe caractéristique, dont la position sur ledit cadran correspond à ladite poussée pilotée.

Par ailleurs, dans un mode de réalisation particulier, lesdits moyens de traitement d'informations déterminent, de plus, une poussée maximale auxiliaire, et lesdits moyens d'affichage présentent de plus, sur ledit écran de visualisation, un quatrième signe caractéristique, dont la position sur ledit cadran correspond à ladite poussée maximale auxiliaire.

En outre, avantageusement, lesdits moyens de traitement d'informations déterminent, de plus, une poussée minimale auxiliaire, et lesdits moyens d'affichage présentent de plus, sur ledit écran de visualisation, un cinquième signe caractéristique, dont la position sur ledit cadran correspond à ladite poussée minimale auxiliaire.

De préférence, lesdits quatrième et cinquième signes caractéristiques délimitent un secteur circulaire qui présente une couleur qui est différente de celle du fond dudit cadran.

Par ailleurs, de façon avantageuse, lesdits moyens de traitement d'informations déterminent le pourcentage THRx d'une poussée x, pour une poussée d'avancement, à partir de l'expression suivante :

$$THRx = (FNx - FNwml) / |FN100 - FNwml|$$

dans laquelle :

- FNx représente la poussée correspondant à un paramètre de commande du moteur ;
- FN 100 représente la poussée d'avancement maximale que le moteur est capable de délivrer hors prélèvements d'air pour la phase de vol actuelle et la configuration actuelle de l'aéronef ; et
- FNwml représente la poussée du moteur en moulinet.

Bien entendu, il est également envisageable que lesdits moyens d'affichage soient susceptibles de présenter, sur ledit écran de visualisation, au moins une valeur de poussée de façon numérique.

Par ailleurs, pour une configuration de l'aéronef présentant une inversion de poussée du moteur, de façon avantageuse, ledit cadran présente une zone négative permettant de présenter les poussées relatives à cette configuration de l'aéronef comme des poussées de valeurs négatives.

De plus, avantageusement, lors d'une inversion de poussée du moteur, lesdits moyens de traitement d'informations déterminent le pourcentage THRx d'une poussée x, à partir de l'expression suivante :

$$THRx = FNx / |FN100|$$

dans laquelle :

- FNx représente la poussée correspondant à un paramètre de commande du moteur ; et
- FN100 représente la poussée inversée maximale que le moteur est capable de délivrer hors prélèvements d'air pour la phase de vol actuelle et la configuration actuelle de l'aéronef.

Ceci permet d'améliorer l'ergonomie de l'interface avec le pilote par rapport aux indicateurs actuels qui affichent dans un tel cas une représentation de la valeur absolue de la poussée due à l'inversion de poussée, associée à une indication d'activation de l'inversion de poussée.

Par ailleurs, dans un mode de réalisation particulier, l'indicateur de pilotage conforme à l'invention comporte, de plus, des moyens de détection qui sont susceptibles de détecter une erreur de l'indication de poussée, et lesdits moyens d'affichage sont susceptibles de présenter sur ledit écran de visualisation une indication d'erreur, lors de la détection d'une erreur par lesdits moyens de détection.

Les figures du dessin annexé feront bien comprendre comment l'invention peut être réalisée. Sur ces figures, des références identiques désignent des éléments semblables.

La figure 1 est le schéma synoptique d'un indicateur de pilotage conforme à l'invention.

Les figures 2 et 3 illustrent un écran de visualisation d'un indicateur de pilotage conforme à l'invention, pour des configurations différentes de l'aéronef.

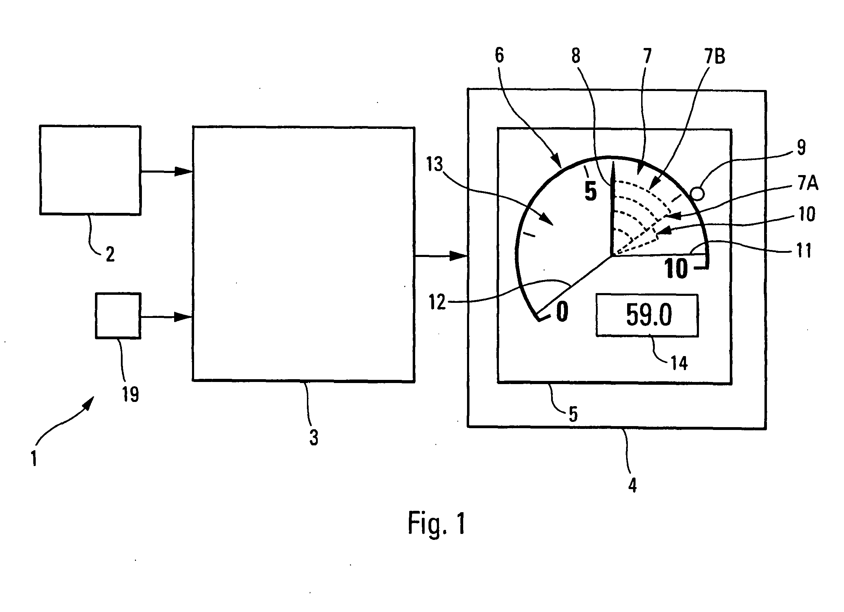

L'indicateur de pilotage 1 conforme à l'invention et représenté schématiquement sur la figure 1, est destiné à fournir sur un aéronef, en particulier un avion de transport civil, la poussée engendrée par au moins un moteur non représenté dudit aéronef.

A cet effet, ledit indicateur de pilotage 1 comporte de façon connue :

- des sources d'informations 2 fournissant au moins des informations relatives à un paramètre usuel de commande du moteur (EPR, N1, ...). Dans un mode de réalisation préféré, lesdites sources d'informations 2 comportent un système de régulation à pleine autorité du moteur de type FADEC ("Full Authority Digital Engine Control"), qui fournit la valeur commandée et la valeur effective dudit paramètre de commande du moteur ;
- des moyens 3 de traitement des informations reçues desdites sources d'informations 2 ; et
- des moyens d'affichage 4 susceptibles de présenter des informations relatives audit moteur sur au moins un écran de visualisation 5.

Selon l'invention :

- lesdits moyens 3 de traitement d'informations déterminent, pour ledit moteur, au moins :

  ■ la poussée maximale THRmax qui est disponible (hors prélèvement d'air) pour la phase de vol actuelle (montée, croisière, descente, ...), dans la configuration actuelle (position des becs, position des volets, ...) de l'aéronef et pour les conditions anémométriques actuelles ;
  ■ la poussée commandée THRcom ; et
  ■ la poussée effective THReff,

  ladite poussée commandée THRcom et ladite poussée effective THReff étant exprimées en pourcentage de ladite poussée maximale THRmax, et
- lesdits moyens d'affichage 4 présentent sur ledit écran de visualisation 5 un cadran 6 qui est gradué en pourcentage (de 0% à 100%) et dont le maximum ("10", c'est-à-dire 100%) représente ladite poussée maximale THRmax, et qui est muni de signes caractéristiques 7 et 8, dont les positions sur ledit cadran 6 représentent respectivement ladite poussée commandée THRcom et ladite poussée effective THReff.

Dans un mode de réalisation préféré :

- ledit signe caractéristique 8 est une aiguille, par exemple de couleur verte, dont la position sur le cadran 6 indique ladite poussée THReff ; et
- ledit signe caractéristique 7 comporte une aiguille 7A, dont la position sur ledit cadran 6 indique ladite poussée THRcom, ainsi que quatre arcs de cercles 7B reliant cette aiguille 7A à ladite aiguille 8. Lesdits éléments 7A et 7B sont, par exemple, formés par des tirets en vert.

Dans un mode de réalisation particulier, lesdits moyens de traitement d'informations 3 déterminent, de plus, une poussée pilotée THRpil qui est exprimée en pourcentage de ladite poussée maximale THRmax et qui correspond à la poussée représentative de la position de la manette de gaz (non représentée) de l'aéronef, et lesdits moyens d'affichage 4 présentent de plus, sur ledit écran de visualisation 5, un signe caractéristique 9, dont la position sur ledit cadran 6 correspond à ladite poussée pilotée THRpil. Ledit signe caractéristique 9, par exemple un cercle bleu, est aligné avec l'aiguille 7A du signe caractéristique 7. Dans un mode de réalisation particulier, on affiche également un triangle 10 qui est associé audit signe caractéristique 7 et qui indique le sens de variation de la commande.

Il est également envisageable de supprimer le signe caractéristique 7 lorsque la poussée est stabilisée. La poussée commandée THRcom correspond alors à la poussée pilotée THRpil et est indiquée par ledit signe caractéristique 9.

Par ailleurs, lesdits moyens de traitement d'informations 3 déterminent, de plus, une poussée maximale auxiliaire THRsup, et lesdits moyens d'affichage 4 présentent de plus, sur ledit écran de visualisation 5, un signe caractéristique 11, dont la position sur ledit cadran 6 correspond à ladite poussée maximale auxiliaire THRsup.

En outre, lesdits moyens de traitement d'informations 3 déterminent, de plus, une poussée minimale auxiliaire THRmin, et lesdits moyens d'affichage 4 présentent de plus, sur ledit écran de visualisation 5 un signe caractéristique 12, dont la position sur ledit cadran 6 correspond à ladite poussée minimale auxiliaire THRmin.

Lesdits signes caractéristiques 11 et 12 qui correspondent à des rayons ou aiguilles dudit cadran 6 délimitent un secteur circulaire 13 qui présente une couleur (par exemple une couleur grise) qui est différente de celle du fond dudit cadran 6 (par exemple de couleur plus claire).

Dans le cadre de la présente invention, les différentes valeurs de poussée peuvent également être affichées de façon numérique, comme représenté par exemple pour la poussée commandée THRcom, dont la valeur est affichée dans une fenêtre 14 sur les figures 1 à 3.

Selon l'invention, pour une configuration de poussée d'avancement usuelle, lesdits moyens de traitement d'informations 3 déterminent ledit pourcentage THRx d'une poussée x, à partir de l'expression (1) suivante :

$$THRx = (FNx - FNwml) / |FN100 - FNwml|$$

dans laquelle :

- FNx représente la poussée correspondant à un paramètre de commande du moteur, EPR ou N1 par exemple, qui est connu par lesdites sources d'informations 2 ;
- FN 100 représente la poussée d'avancement maximale que le moteur est capable de délivrer, hors prélèvements d'air, pour la phase de vol actuelle et la configuration actuelle de l'aéronef ; et
- FNwml représente la poussée du moteur en moulinet, c'est-à-dire la poussée relative à la rotation du moteur obtenue, après extinction, par l'autorotation de l'attelage compresseur-turbine du moteur.

Ainsi, on calcule une poussée exprimée en pourcentage THRx en utilisant la valeur de poussée correspondante FNx. A titre d'illustration :

- pour calculer THReff, on utilise la poussée effective FNeff ;
- pour calculer THRcom, on utilisé la poussée commandée FNcom qui est la poussée correspondant au paramètre de commande tel que commandé (EPRcom ou N1com) ;
- pour calculer THRpil, on utilise la poussée FNpil correspondant à la position de la manette des gaz ;
- pour calculer THRsup, on utilise la poussée FNsup qui représente la poussée maximale que le moteur est capable de délivrer, en prenant en compte la configuration de prélèvement d'air, pour la phase de vol actuelle et la configuration de vol actuelle ; et
- pour calculer THRmin, on utilise la poussée FNmin existant lorsque le moteur tourne au ralenti (dans le sens de l'avancement).

Dans le mode de réalisation particulier représenté sur la figure 1, l'indicateur de pilotage 1 conforme à l'invention affiche uniquement des informations de poussée concernant un seul moteur de l'aéronef.

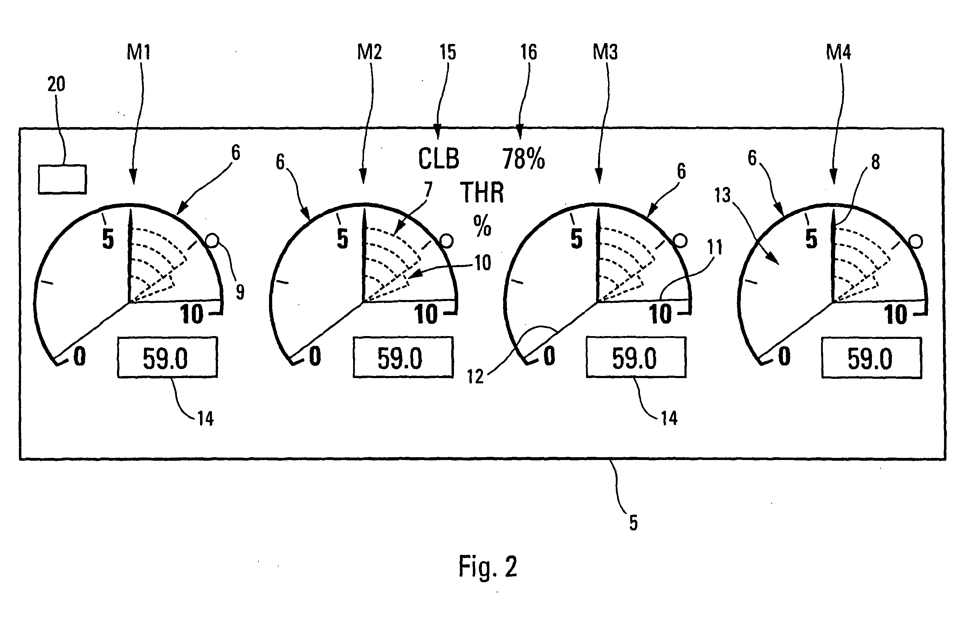

Par ailleurs, dans un mode de réalisation préféré représenté sur la figure 2, qui concerne une configuration d'avancement usuel de l'aéronef, l'indicateur de pilotage 1 affiche les informations de poussée THR (exprimées en %) concernant tous les moteurs M1, M2, M3, M4 de l'aéronef. A cet effet, l'écran de visualisation 5 affiche un cadran 6 pour chacun desdits moteurs M1 à M4.

On notera que, dans cet exemple, tous les moteurs M1 à M4 présentent la même poussée.

Dans ce mode de réalisation préféré, les moyens d'affichage 4 présentent, de plus, sur l'écran de visualisation 5 :

- une indication 15 du mode d'opération des moteurs, par exemple la montée ("CLB" étant l'abréviation du terme anglais "climb" qui signifie montée) ; et
- un affichage numérique 16 ("78%") d'une poussée limite THRlim qui représente la poussée maximale qui peut être atteinte dans le mode d'opération des moteurs.
- L'indicateur de pilotage 1 conforme à l'invention permet également de présenter des informations de poussée lorsque la configuration de l'aéronef présente une inversion de poussée. On sait qu'une inversion de poussée est obtenue par une déviation du gaz de combustion ou du flux secondaire traversant la soufflante du moteur vers l'avant. Cette déviation crée une contre-poussée servant à freiner l'aéronef lors de la phase d'atterrissage. Elle est obtenue par interposition dans la veine gazeuse de coquilles ou de persiennes.

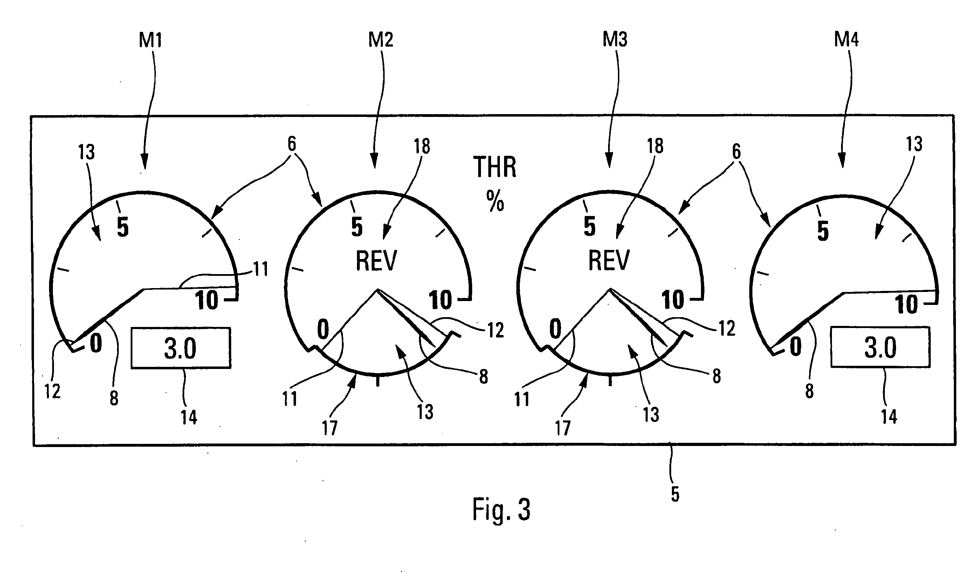

Dans un tel cas, comme représenté sur la figure 3, pour chaque moteur M2 et M3 qui engendre une inversion de poussée, le cadran 6 correspondant présente une zone négative 1 7 permettant de présenter les poussées relatives à cette configuration de l'aéronef, comme des poussées de valeurs négatives. De plus, on affiche une indication 18 ("REV") pour signaler l'inversion de poussée du moteur M2, M3 correspondant.

Ceci permet d'améliorer l'ergonomie de l'interface avec le pilote par rapport aux indicateurs usuels qui affichent dans un tel cas une représentation de la valeur absolue de la poussée due à l'inversion de poussée, associée à une indication d'activation de l'inversion de poussée.

Selon l'invention, lors d'une inversion de poussée, lesdits moyens de traitement d'informations 3 déterminent le pourcentage THRx d'une poussée x, à partir de l'expression (2) suivante :

$$THRx = FNx / |FN100|$$

dans laquelle :

- FNx représente la poussée correspondant à un paramètre de commande du moteur ; et
- FN100 représente la poussée inversée maximale que le moteur est capable de délivrer, hors prélèvements d'air, pour la phase de vol actuelle et la configuration actuelle de l'aéronef.

Dans ce cas, pour calculer THRsup (signe caractéristique 11), on utilise la poussée inversée délivrée par le moteur au ralenti, et pour calculer THRmin (signe caractéristique 12), on utilise la poussée inversée maximale que le moteur est capable de délivrer en prenant en compte la configuration de prélèvement d'air pour la phase de vol actuelle et la configuration de vol actuelle.

Pour calculer les autres informations de poussée THRx, on utilise les poussées FNx précitées, appliquées bien entendu cette fois à l'expression (2) précédente.

Dans un mode de réalisation particulier, l'indicateur de pilotage 1 conforme à l'invention comporte, de plus, des moyens de détection 19 qui sont représentés sur la figure 1 et qui sont susceptibles de détecter une erreur de l'indication de poussée, et lesdits moyens d'affichage 4 sont susceptibles de présenter sur ledit écran de visualisation 5 une indication d'erreur, par exemple dans une fenêtre 20 telle que représentée sur la figure 2, lors de la détection d'une telle erreur par lesdits moyens de détection 19.

Dans un mode de réalisation préféré, lesdits moyens de détection 19 sont des moyens de calcul qui sont intégrés dans les moyens de traitement d'informations 3.

**Revendications**

**1.** Indicateur de pilotage pour un aéronef, destiné à fournir la poussée (THR) engendrée par au moins un moteur de l'aéronef, ledit indicateur de pilotage (1) comportant :

- des sources d'informations (2) fournissant au moins des informations relatives à un paramètre de commande du moteur ;
- des moyens (3) de traitement d'informations reçues desdites sources d'informations (2) ; et
- des moyens d'affichage (4) susceptibles de présenter des informations relatives audit moteur sur au moins un écran de visualisation (5), lesdits moyens de traitement d'informations (3) déterminant, pour ledit moteur, au moins :
- la poussée maximale qui est disponible pour la phase de vol actuelle, en fonction de la configuration actuelle de l'aéronef et pour les conditions anémométriques actuelles ;
- la poussée commandée ; et
- la poussée effective, lesdites poussées commandée et effective étant exprimées en pourcentage de ladite poussée maximale,

et lesdits moyens d'affichage (4) présentant, sur ledit écran de visualisation (5), un cadran (6) qui est gradué en pourcentage, dont le maximum représente ladite poussée maximale, et qui est muni de premier et deuxième signes caractéristiques (7, 8), dont les positions sur ledit cadran (6) représentent respectivement lesdites poussées commandée et effective.

**2.** Indicateur de pilotage selon la revendication 1,
**caractérisé en ce que** lesdits moyens de traitement d'informations (3) déterminent, de plus, une poussée pilotée qui est exprimée en pourcentage de ladite poussée maximale et qui correspond à la poussée représentative de la position de la manette de gaz de l'aéronef, et **en ce que** lesdits moyens d'affichage (4) présentent de plus, sur ledit écran de visualisation (5), un troisième signe caractéristique (9), dont la position sur ledit cadran (6) correspond à ladite poussée pilotée.

**3.** Indicateur de pilotage selon l'une des revendications 1 et 2, **caractérisé en ce que** lesdits moyens de traitement d'informations (3) déterminent, de plus, une poussée maximale auxiliaire, et **en ce que** lesdits moyens d'affichage (4) présentent de plus, sur ledit écran de visualisation (5), un quatrième signe caractéristique (11), dont la position sur ledit cadran (6) correspond à ladite poussée maximale auxiliaire.

**4.** Indicateur de pilotage selon l'une des revendications 1 à 3, **caractérisé en ce que** lesdits moyens de traitement d'informations (3) déterminent, de plus, une poussée minimale auxiliaire, et **en ce que** lesdits moyens d'affichage (4) présentent de plus, sur ledit écran de visualisation (5), un cinquième signe caractéristique (12), dont la position sur ledit cadran (6) correspond à ladite poussée minimale auxiliaire.

**5.** Indicateur de pilotage selon les revendications 3 et 4, **caractérisé en ce que** lesdits quatrième et cinquième signes caractéristiques (11, 12) délimitent un secteur circulaire (13) qui présente une couleur qui est différente de celle du fond dudit cadran (6).

**6.** Indicateur de pilotage selon l'une quelconque des revendications précédentes,
**caractérisé en ce que** lesdits moyens de traitement d'informations (3) déterminent le pourcentage THRx d'une poussée x, pour une poussée d'avancement, à partir de l'expression suivante :

$$THRx = (FNx - FNwml) / |FN100 - FNwml|$$

dans laquelle :

- FNx représente la poussée correspondant à un paramètre de commande du moteur ;
- FN 100 représente la poussée d'avancement maximale que le moteur est capable de délivrer hors prélèvements d'air pour la phase de vol actuelle et la configuration actuelle de l'aéronef ; et
- FNwml représente la poussée du moteur en moulinet.

**7.** Indicateur de pilotage selon l'une quelconque des revendications précédentes,
**caractérisé en ce que** lesdits moyens d'affichage (4) sont susceptibles de présenter, sur ledit écran de visualisation (5), au moins une valeur de poussée de façon numérique (14).

**8.** Indicateur de pilotage selon l'une quelconque des revendications précédentes, pour une configuration de l'aéronef présentant une inversion de poussée du moteur,
**caractérisé en ce que** ledit cadran (6) présente une zone négative (17) permettant de présenter les poussées relatives à cette configuration de l'aéronef comme des poussées de valeurs négatives.

**9.** Indicateur de pilotage selon la revendication 8,
**caractérisé en ce que**, lors d'une inversion de poussée du moteur, lesdits moyens de traitement d'informations (3) déterminent le pourcentage THRx d'une poussée x, à partir de l'expression suivante :

$$THRx = FNx / |FN100|$$

dans laquelle :

- FNx représente la poussée correspondant à un paramètre de commande du moteur ; et
- FN100 représente la poussée inversée maximale que le moteur est capable de délivrer hors prélèvements d'air pour la phase de vol actuelle et la configuration actuelle de l'aéronef.

**10.** Indicateur de pilotage selon l'une quelconque des revendications précédentes,
**caractérisé en ce qu'**il comporte, de plus, des moyens de détection (19) qui sont susceptibles de détecter une erreur de l'indication de poussée, et **en ce que** lesdits moyens d'affichage (4) sont susceptibles de présenter sur ledit écran de visualisation (5) une indication d'erreur, lors de la détection d'une erreur par lesdits moyens de détection (19).

**11.** Aéronef,
**caractérisé en ce qu'**il comporte un indicateur de pilotage (1) tel que celui spécifié sous l'une quelconque des revendications 1 à 10.

## Claims

**1.** A flight control indicator for an aircraft, intended to supply the thrust (THR) generated by at least one engine of the aircraft, said flight control indicator (1) comprising:

- information sources (2) supplying at least information relating to a control parameter of the engine;
- means (3) for processing information received from said information sources (2); and
- display means (4) able to present information relating to said engine on at least one viewing screen (5),

wherein said information processing means (3) determine, for said engine, at least:

- the maximum thrust which is available for the current phase of flight, as a function of the current configuration of the aircraft and for the current anemometric conditions;
- the prescribed thrust; and
- the actual thrust, said prescribed and actual thrusts being expressed as a percentage of said maximum thrust,

and wherein said display means (4) present, on said viewing screen (5), a dial (6) which is graduated in percentage, whose maximum represents said maximum thrust, and which is furnished with first and second characteristic signs (7, 8) whose positions on said dial (6) respectively represent said prescribed and actual thrusts.

**2.** The flight control indicator as claimed in claim 1,
**characterized in that** said information processing means (3) determine, moreover, a controlled thrust which is expressed as a percentage of said maximum thrust and which corresponds to the thrust representative of the position of the throttle of the aircraft, and **in that** said display means (4) further present, on said viewing screen (5), a third characteristic sign (9) whose position on said dial (6) corresponds to said controlled thrust.

**3.** The flight control indicator as claimed in one of claims 1 and 2,
**characterized in that** said information processing means (3) determine, moreover, an auxiliary maximum thrust, and **in that** said display means (4) furthermore present, on said viewing screen (5), a fourth characteristic sign (11), whose position on said dial (6) corresponds to said auxiliary maximum thrust.

**4.** The flight control indicator as claimed in one of claims 1 to 3,
**characterized in that** said information processing means (3) determine, moreover, an auxiliary minimum thrust and **in that** said display means (4) furthermore present, on said viewing screen (5), a fifth characteristic sign (12), whose position on said dial (6) corresponds to said auxiliary minimum thrust.

**5.** The flight control indicator as claimed in claims 3 and 4,
**characterized in that** said fourth and fifth characteristic signs (11, 12) delimit a circular sector (13) which presents a color which is different from that of the background of said dial (6).

**6.** The flight control indicator as claimed in any one of the preceding claims,
**characterized in that** said information processing means (3) determine the percentage THRx of a thrust $\underline{x}$, for a forward thrust, from the following expression:

$$THRx = (FNx - FNwml) / |FN100 - FNwml|$$

where:

- FNx represents the thrust corresponding to a control parameter of the engine;

- FN100 represents the maximum forward thrust that the engine is capable of delivering without air bleed for the current phase of flight and the current configuration of the aircraft; and
- FNwml represents the thrust of the windmilling engine.

7. The flight control indicator as claimed in any one of the preceding claims,
   **characterized in that** said display means (4) are able to present, on said viewing screen (5), at least one value of thrust digitally (14).

8. The flight control indicator as claimed in any one of the preceding claims, for a configuration of the aircraft exhibiting a thrust reversal of the engine,
   **characterized in that** said dial (6) presents a negative zone (17) making it possible to present the thrusts relating to this configuration of the aircraft as thrusts of negative values.

9. The flight control indicator as claimed in claim 8,
   **characterized in that**, during a thrust reversal of the engine, said information processing means (3) determine the percentage THRx of a thrust x, from the following expression:

$$\mathrm{THRx} = \mathrm{FNx} \ / \ |\mathrm{FN100}|$$

in which:

   - FNx represents the thrust corresponding to a control parameter of the engine; and
   - FN100 represents the maximum reverse thrust that the engine is capable of delivering without air bleed for the current phase of flight and the current configuration of the aircraft.

10. The flight control indicator as claimed in any one of the preceding claims,
    **characterized in that** it furthermore comprises detection means (19) which are able to detect an error in the thrust indication, and where said display means (4) are able to present on said viewing screen (5) an error indication, during the detection of an error by said detection means (19).

11. An aircraft,
    **characterized in that** it comprises a flight control indicator (1) such as that specified under any one of claims 1 to 10.

**Patentansprüche**

1. Steuerungsanzeige für ein Flugzeug, die dazu bestimmt ist, den von mindestens einem Motor des Flugzeugs erzeugten Schub (THR) zu liefern, wobei die Steuerungsanzeige (1) aufweist:

   - Informationsquellen (2), die mindestens Informationen liefern, die sich auf einem Steuerparameter des Motors beziehen,
   - Verarbeitungsmittel (3) von Informationen, die von den Informationsquellen (2) empfangen werden, und
   - Anzeigemittel (4), die imstande sind, sich auf den Motor beziehende Informationen auf mindestens einem Bildschirm (5) darzustellen,
   wobei die Informationsverarbeitungsmittel (3) für den Motor mindestens bestimmen:
   - den maximalen Schub, der für die aktuelle Flugphase in Abhängigkeit von der aktuellen Konfiguration des Flugzeugs und für die aktuellen Windbedingungen zur Verfügung steht,
   - den befohlenen Schub und
   - den tatsächlichen Schub, wobei der befohlene und der tatsächliche Schub in Prozent vom maximalen Schub ausgedrückt werden,
   wobei die Anzeigemittel (4) auf dem Bildschirm (5) ein Zifferblatt (6) aufweisen, das in Prozenten skaliert ist, dessen Maximum den maximalen Schub darstellt, und das mit einem ersten und zweiten charakteristischen Zeichen (7, 8) ausgestattet ist, dessen Positionen auf dem Zifferblatt (6) jeweils den befohlenen und tatsächlichen Schub darstellen.

2. Steuerungsanzeige nach Anspruch 1,

**dadurch gekennzeichnet, dass** die Informationsverarbeitungsmittel (3) ferner einen gesteuerten Schub bestimmen, der in Prozent des maximalen Schubs ausgedrückt ist und der dem Schub entspricht, der für die Position des Gashebels des Flugzeugs repräsentativ ist, und dass die Anzeigemittel (4) ferner auf dem Bildschirm (5) ein drittes charakteristisches Zeichen (9) aufweisen, dessen Position auf dem Zifferblatt (6) dem gesteuerten Schub entspricht.

3.  Steuerungsanzeige nach einem der Ansprüche 1 und 2, **dadurch gekennzeichnet, dass** die Informationsverarbeitungsmittel (3) ferner einen maximalen Hilfsschub bestimmen und dass die Anzeigemittel (4) ferner auf dem Bildschirm (5) ein viertes charakteristisches Zeichen (11) aufweisen, dessen Position auf dem Zifferblatt (6) dem maximalen Hilfsschub entspricht.

4.  Steuerungsanzeige nach einem der Ansprüche 1 bis 3, **dadurch gekennzeichnet, dass** die Informationsverarbeitungsmittel (3) ferner einen minimalen Hilfsschub bestimmen und dass die Anzeigemittel (4) ferner auf dem Bildschirm (5) ein fünftes charakteristisches Zeichen (12) aufweisen, dessen Position auf dem Zifferblatt (6) dem minimalen Hilfsschub entspricht.

5.  Steuerungsanzeige nach den Ansprüchen 3 und 4, **dadurch gekennzeichnet, dass** das vierte und fünfte charakteristische Zeichen (11, 12) einen kreisrunden Sektor (13) begrenzen, der eine Farbe aufweist, die sich von der Farbe des Hintergrunds des Zifferblatts (6) unterscheidet.

6.  Steuerungsanzeige nach einem der vorangehenden Ansprüche,
    **dadurch gekennzeichnet, dass** die Informationsverarbeitungsmittel (3) den Prozentwert THRx eines Schubs $\underline{x}$ für einen Vorwärtsschub mit dem folgenden Ausdruck bestimmen:

$$THRx = (FNx - FNwml) \, / \, \left| FN100 - FNwml \right|$$

wobei:

   - FNx den Schub darstellt, der einem Befehlsparameter des Motors entspricht,
   - FN100 den maximalen Vorwärtsschub darstellt, den der Motor in der Lage ist zu liefern, Luftentnahmen für die aktuelle Flugphase und die aktuelle Konfiguration des Flugzeugs ausgenommen, und
   - FNwml den Propellerschub des Motors darstellt.

7.  Steuerungsanzeige nach einem der vorangehenden Ansprüche,
    **dadurch gekennzeichnet, dass** die Anzeigemittel (4) in der Lage sind, auf dem Bildschirm (5) mindestens einen Schubwert digital (14) anzuzeigen.

8.  Steuerungsanzeige nach einem der vorangehenden Ansprüche für eine Flugzeugkonfiguration, die eine Schubumkehr des Motors aufweist,
    **dadurch gekennzeichnet, dass** das Zifferblatt (6) einen negativen Bereich (17) aufweist, der es erlaubt, die Schübe darzustellen, die dieser Flugzeugkonfiguration wie Schüben mit negativen Werten entsprechen.

9.  Steuerungsanzeige nach Anspruch 8,
    **dadurch gekennzeichnet, dass** die Informationsverarbeitungsmittel (3) bei einer Schubumkehr des Motors den Prozentwert THRx eines Schubs $\underline{x}$ mit dem folgenden Ausdruck bestimmen:

$$THRx = FNx \, / \, \left| FN100 \right|$$

wobei:

   - FNx den Schub darstellt, der einem Befehlsparameter des Motors entspricht, und
   - FN100 den maximalen Umkehrschub darstellt, den der Motor in der Lage ist zu liefern, Luftentnahmen für die aktuelle Flugphase und die aktuelle Konfiguration des Flugzeugs ausgenommen.

10. Steuerungsanzeige nach einem der vorangehenden Ansprüche,

**dadurch gekennzeichnet, dass** sie ferner Detektionsmittel (19) aufweist, die in der Lage sind, einen Fehler der Schubanzeige zu erfassen, und dass die Anzeigemitte (4) in der Lage sind, auf dem Bildschirm (5) bei der Erfassung eines Fehlers durch die Detektionsmittel (19) eine Fehleranzeige darzustellen.

11. Flugzeug,
**dadurch gekennzeichnet, dass** es eine Steuerungsanzeige (1) umfasst wie in einem der Ansprüche 1 bis 10 spezifiziert.

Fig. 1

Fig. 2

Fig. 3

EP 1 471 334 B1

**EP 1 471 334 B1**

## RÉFÉRENCES CITÉES DANS LA DESCRIPTION

**Documents brevets cités dans la description**

- US 2002072831 A